**Europäisches Patentamt**

(19) **European Patent Office**

**Office européen des brevets**

(11) Publication number: **0 295 921 B1**

# EUROPEAN PATENT SPECIFICATION

(45) Date of publication of patent specification:
31.07.91 Bulletin 91/31

(51) Int. Cl.⁵: **G11B 23/04**

(21) Application number: **88305521.2**

(22) Date of filing: **16.06.88**

(54) **Magnetic tape cassettes.**

(30) Priority: **18.06.87 JP 94030/87**

(43) Date of publication of application:
**21.12.88 Bulletin 88/51**

(45) Publication of the grant of the patent:
**31.07.91 Bulletin 91/31**

(84) Designated Contracting States:
**CH DE FR GB LI**

(56) References cited:
**EP-A- 0 071 996**
**EP-A- 0 160 822**
**FR-A- 2 556 487**

(73) Proprietor: **SONY CORPORATION**
**7-35 Kitashinagawa 6-Chome Shinagawa-ku**
**Tokyo 141 (JP)**

(72) Inventor: **Katoku, Takashi c/o Patent Division**
**Sony Corporation 6-7-35 Kitashinagawa**
**Shinagawa-ku Tokyo 141 (JP)**
Inventor: **Tanaka, Masato c/o Patent Division**
**Sony Corporation 6-7-35 Kitashinagawa**
**Shinagawa-ku Tokyo 141 (JP)**

(74) Representative: **Thomas, Christopher Hugo et al**
**D Young & Co 10 Staple Inn**
**London WC1V 7RD (GB)**

## Description

This invention relates to magnetic tape cassettes. Embodiments of the invention are particularly, but not exclusively, suitable for accommodating therein a magnetic tape on and/or from which a pulse code modulated (PCM) signal is recorded and/or reproduced.

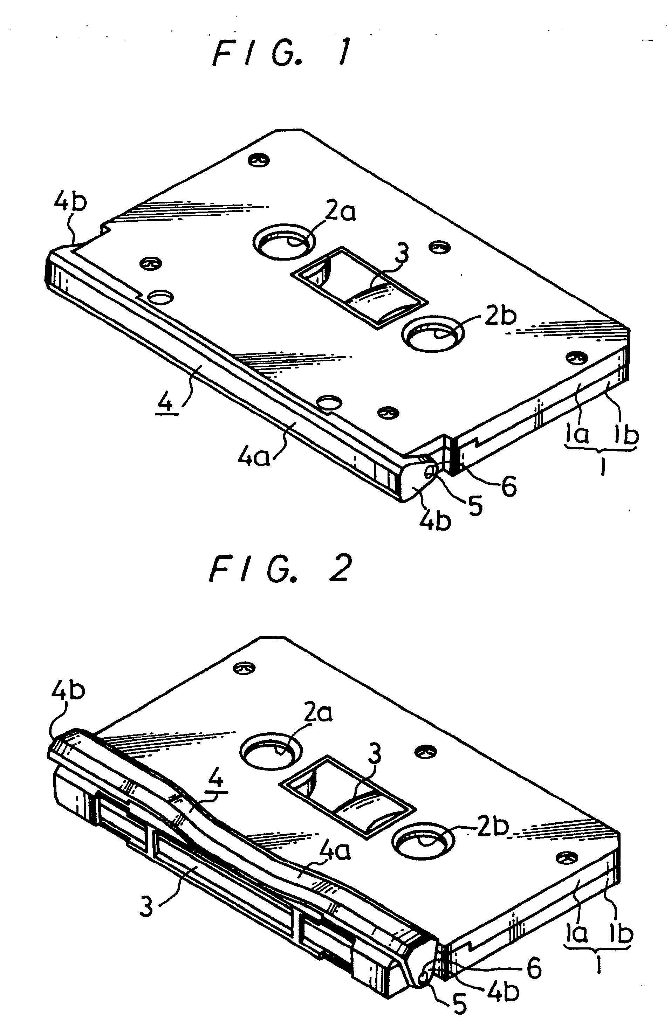

Figures 1 and 2 show a previously proposed magnetic tape cassette in which a magnetic tape for a PCM signal is accommodated.

As Figure 1 shows, a cassette housing 1 comprises an upper half 1a and a lower half 1b, which are secured together by screws. A pair of reel hubs 2a and 2b are mounted rotatably in the housing 1, and a magnetic tape 3 is wound on the reel hubs 2a and 2b. A front lid 4 is pivotably mounted on the housing 1 so as selectively to open or close the front opening portion of the housing 1.

Figure 1 shows the front opening portion of the housing 1 closed by the lid 4. The lid 4 comprises a lid main section 4a and a pair of side supporting sections 4b. The main section 4a has a rectangular configuration having a length and width sufficient for it to close the entire front opening portion of the tape cassette. The side supporting sections 4b extend from the ends of the main section 4a and are bent backwards at a right angle. The side supporting sections 4b each have a respective shaft aperture engaging with a respective shaft 6 provided at a predetermined position on each side wall of the housing 1. The lid 4 is made of a plastics material having sufficient flexibility that when it is urged towards the housing 1 side, it can be engaged with the front opening portion of the housing 1 due to its elastic deformation, and is held at a predetermined position to close the front opening portion of the housing 1.

Figure 2 illustrates the cassette 1 ready for recording or reproduction. The lid 4 is opened manually, or automatically by an automatic lid opening and/or closing mechanism (not shown) of a tape recorder or the like, and the tape 3 is exposed in the front opening portion of the housing 1.

In non-use, as illustrated in Figure 1, the front opening portion of the housing 1 is closed by the lid 4 so as to protect the tape 3 in the front opening portion from being touched, and to prevent dust or smudges getting on the tape 3.

With this tape cassette, the lid 4 can selectively be rotated in an up or a down direction relative to the front opening portion of the housing 1, thus making it possible to effect recording and/or reproduction on both tracks and A and B of the tape 3. When accommodating a plurality of such tape cassettes in a cassette magazine such that the tracks A and B of each tape cassette are aligned side by side, the tape cassettes have to be put into the cassette magazine with their tracks A and B aligned, while looking at the indications on labels on the tape cassettes.

A so-called micro-tape cassette is the smallest tape cassette now available on the market. If such a micro-tape cassette is further miniaturized, for example, to be some 25 × 20 × 5 mm in size, the track indications on the label become difficult to see. Hence, it is difficult to put such tape cassette in a magazine so as to align their tracks A and B side by side.

Moreover, when the tape 3 is to be transported at a constant speed, with the lid 4 open, a capstan rotatably contacts a guide roller (not shown) provided within the housing 1 at the side wall portion adjacent to the tape path in the front opening. Since the lid 4 is located above the front opening portion of the housing 1, the lid 4 may conflict with or contact the bearing of the capstan or a capstan arm. To overcome this problem, the capstan has to be long, but then the capstan needs a larger space, and the tape recorder is increased in size.

According to the present invention there is provided a magnetic tape cassette comprising :
  a cassette housing having a front opening portion ; and
  a front lid formed of a lid main section and supporting arm portions attached perpendicularly to said lid main section at respective end portions thereof, said front lid being pivotably mounted on the front of said cassette housing by said supporting arm portions so as selectively to open and close said front opening portion of said cassette housing ;
characterized by :
guide means formed on the front surface portion of said lid main section at an asymmetrical position relative to the up and down direction of said front lid and extending in a longitudinal direction.

According to the present invention there is also provided a magnetic tape cassette comprising :
  a cassette housing having a front opening portion ;
  a front lid formed of a lid main section and supporting arm portions attached perpendicularly to said lid main section at respective end portions thereof, said front lid being pivotably mounted on the front of said cassette housing by said supporting arm portions so as selectively to open and close said front opening portion of said cassette housing ;
  tape guide rollers provided in said cassette housing at respective side end portions of the front opening portion of said cassette housing ;
characterized by :
grooves respectively formed on both side end portions of said lid main section at positions opposite to said guide rollers in a direction perpendicular to the longitudinal direction.

The invention will now be described by way of example with reference to the accompanying drawings, throughout which like parts are referred to by like references, and in which :

Figures 1 and 2 are perspective views of a previously proposed magnetic tape cassette with its front lid closed and open, respectively ;

Figure 3 is a perspective view of an embodiment of magnetic tape cassette according to the present invention ;

Figures 4 and 6 are perspective and side views respectively of the cassette of Figure 3 with its front lid open ;

Figure 5 is a plan view of the cassette of Figure 3 with parts shown in cross-section ;

Figure 7 is an enlarged cross-sectional view taken through the line A-A of Figure 6 looking in the direction of the arrows ;

Figure 8 is an enlarged cross-sectional view taken through the line B-B of Figure 5 looking in the direction of the arrows ;

Figure 9 is a perspective view of the cassette of Figure 3 in use ; and

Figure 10 is a perspective view of a cassette magazine in which a plurality of the cassettes of Figure 3 can be accommodated.

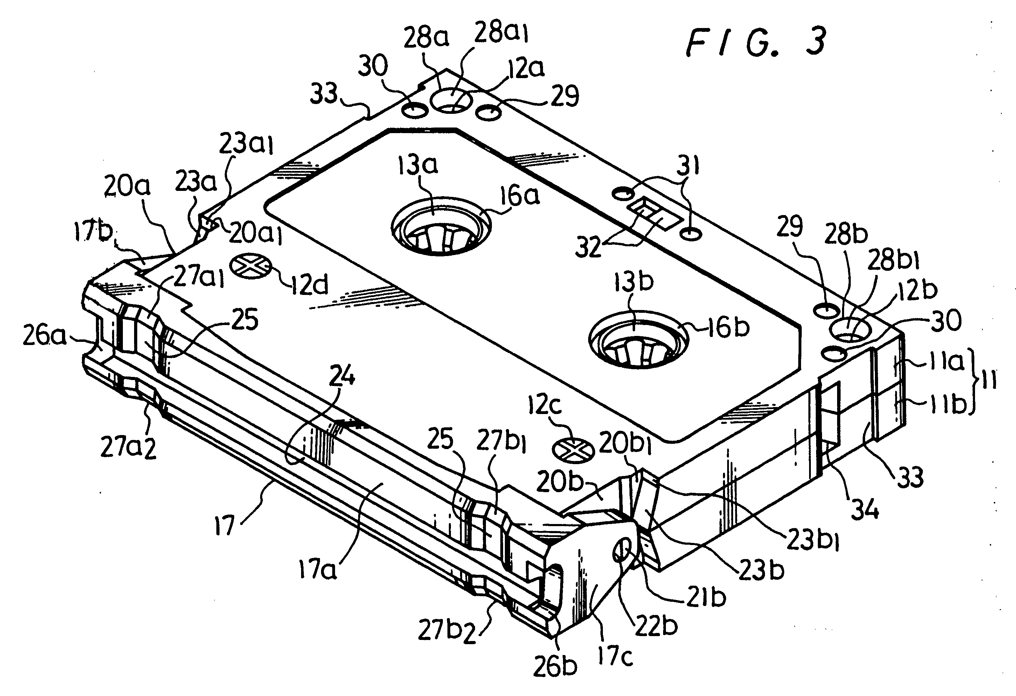

The embodiment of magnetic tape cassette to be described with reference to Figures 3 to 9 may be very small, for example, about 25 × 20 × 5 mm.

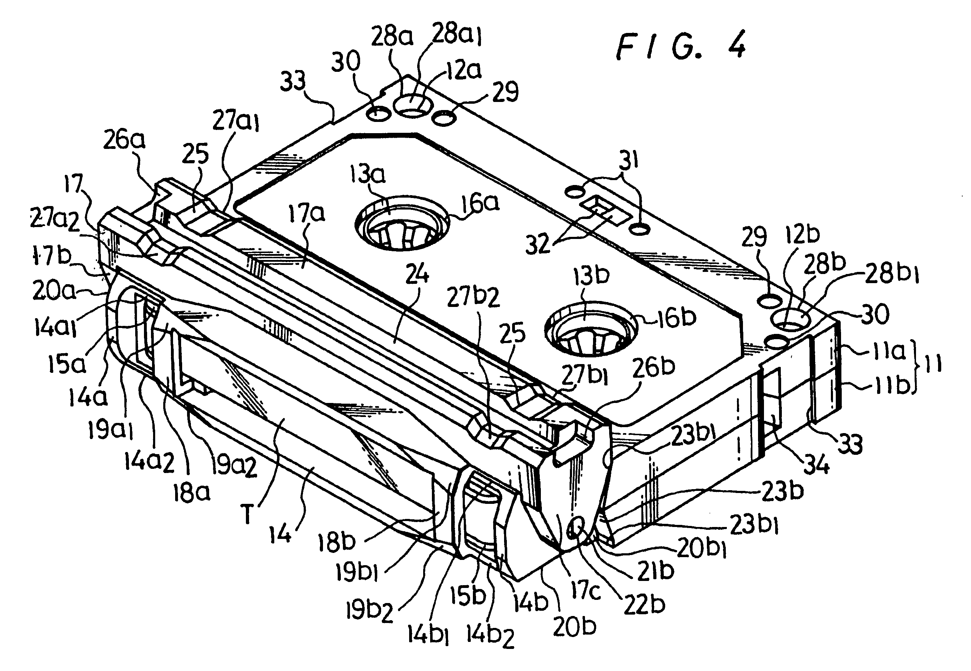

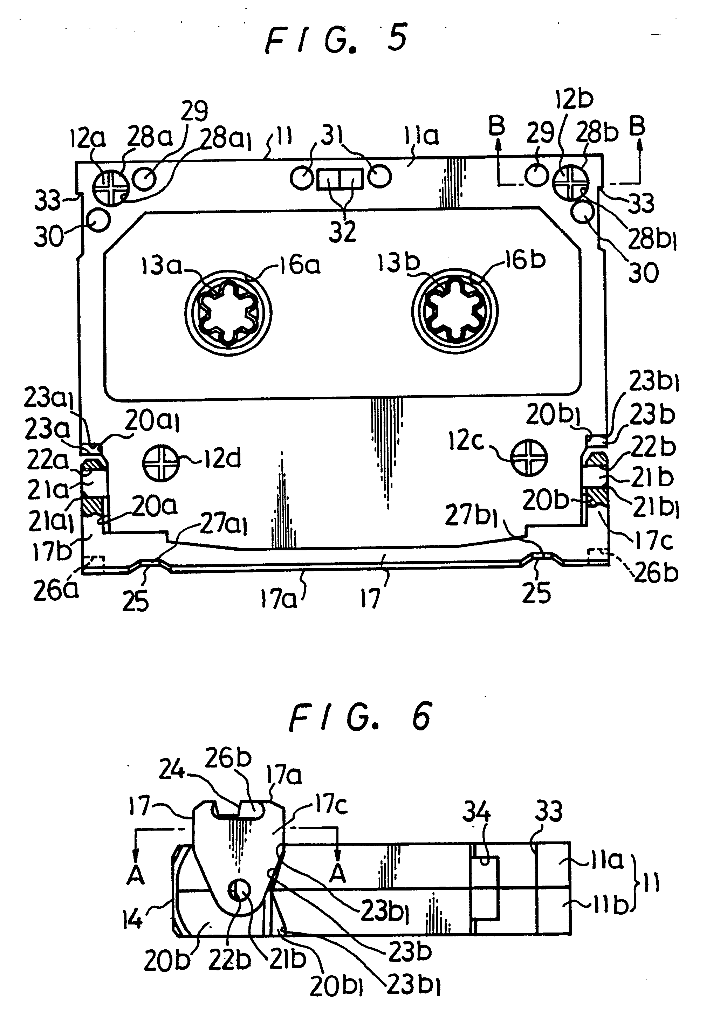

As Figures 3 and 4 show, there is provided a cassette housing 11 in which a magnetic tape T is accommodated. As described above, a PCM signal, for example, is recorded on the tape T. The housing 11 comprises an upper half 11a and a lower half 11b which are secured together by a suitable coupling means such as four screws 12a, 12b, 12c and 12d (see Figure 5). Within the housing 11, the tape T is wound on a pair of tape reels 13a and 13b.

As Figure 4 shows, at the front side of the housing 11, there is formed a front opening portion 14 which occupies substantially the whole front of the housing 11. A pair of guide rollers 15a and 15b are rotatably provided within the housing 11 at the side end portions of the front opening portion 14. Thus, a tape path for the tape T is formed between the guide rollers 15a and 15b in the front opening portion 14 along which the tape T is transported. The tape T passes around the guide rollers 15a and 15b and is then wound onto the tape reels 13a and 13b. Through the upper and lower walls or on the upper half 11a and the lower half 11b of the housing 11, there are symmetrically formed reel shaft receiving apertures 16a and 16b which receive the tape reels 13a and 13b, respectively.

At the front of the housing 11, a front lid 17 is pivotably mounted so as selectively to open or close the front opening portion 14. As described above, the lid 17 is made of a flexible plastics material and comprises a lid main section 17a opposing the front opening portion 14, and support arm portions 17b and 17c which extend at a right angle from the respective ends of the lid main section 17a towards the rear of the housing 11. The lid main section 17a is biased backwards towards the inside of the housing 11.

In this cassette, as shown in Figure 4, step portions 14a and 14b are respectively formed on side end portions of the front opening portion 14, which forms a part of the tape path portion of the housing 11. The step portions 14a and 14b are respectively recessed rearward as compared with the central portion of the front opening portion 14. On the upper and lower edges of both the step portions 14a and 14b, there are formed cut-away concave portions 14a1, 14b1, 14a2 and 14b2 in such a manner that a part of each of the guide rollers 15a and 15b can be viewed from the upper and lower sides. Guide members 18a and 18b are respectively secured to the front opening portion 14 at positions inside the step portions 14a and 14b so as to bridge the upper and lower edges of the front opening portion 14. The upper and lower edges of the front opening portion 14 are tapered to provide tapered surfaces 19a1, 19b1, 19a2 and 19b2 which are extended and inclined gradually to the rear side from the inside of the guide member 18a and 18b to the step portions 14a and 14b, respectively.

On the front end portions of both side walls of the housing 11, stepped surface portions 20a and 20b are formed so as to oppose the arm portions 17b and 17c of the lid 17 over the upper half 11a and the lower half 11b. The depth of each of the stepped surface portions 20a and 20b is substantially equal to the thickness of each of the arm portions 17b and 17c. As shown in, for example, Figure 5, shafts 21a and 21b are respectively implanted on the stepped surface portions 20a and 20b, while shaft apertures 22a and 22b are respectively formed through the arm portions 17b and 17c of the lid 17. The apertures 22a and 22b of the arm portions 17b and 17c of the lid 17 are rotatably engaged with the shafts 21a and 21b respectively, so that the lid 17 is rotatable upwardly or downwardly with respect to the housing 11, so as selectively to open or close the front opening portion 14.

When the lid 17 closes the front opening portion 14, the lid main section 17a is elastically deformed, and is brought into contact with the upper and lower edges of the front opening portion 14, that is, the front end edges of the upper half 11a and the lower half 11b and is thereby supported. When the lid 17 closes the front opening portion 14, as the lid main section 17a is elastically deformed, the arm portions 17b and 17c are inwardly biased and brought into contact with the stepped surface portions 20a and 20b respectively of the housing 11, so the outer surfaces of both the arm portions 17b and 17c are substantially flush with the outer surfaces of the side walls of the housing 11, as shown in Figure 5.

When the lid main section 17a is in contact with the upper or lower edges of the front opening portion 14 of the housing 11 while the lid 17 is being rotated to open the front opening portion 14, the elastic deformation of the lid main section 17a is a maximum, so it is in the engaged state, or the dead point position. When the lid main section 17a passes this dead point position, it recovers from the deformed state and the lid 17 is rotated upwardly or downwardly to open the front opening portion 14 of the housing 11, with a so-called click operation. In this condition, the arm portions 17b and 17c are free from the biasing force of the lid main section 17a, and they are released from contact with the stepped surface portions 20a and 20b of the housing 11. Then, clearances could be produced between the arm portions 17b and 17c and the stepped surface portions 20a and 20b, and the lid 17 could slide in the lateral direction.

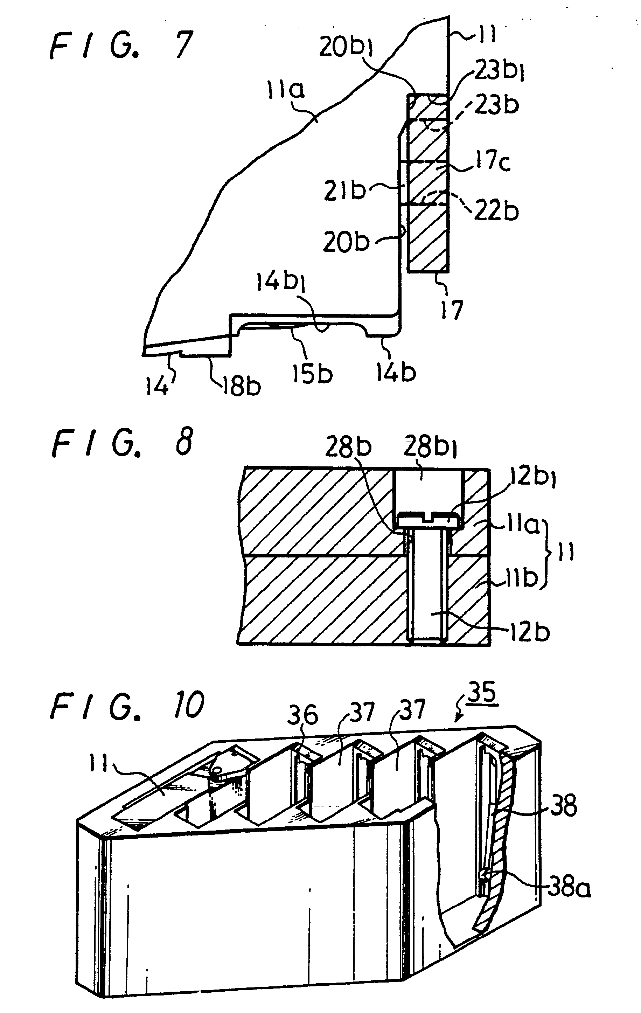

To overcome this problem, as shown, for example, in Figure 5, outwardly-protruded edge surface 20a1 and 20b1 are respectively formed on the stepped surface portions 20a and 20b of the housing 11 at positions so as to come into contact with the inner surfaces of the arm portions 17b and 17c when the lid 17 is opened (Figure 7). The protruded edge surfaces 20a1 and 20b1 can prevent the lid 17 from sliding in the lateral direction when it is open. The protruded edge surfaces 20a1 and 20b1 are respectively formed at such positions that they are spaced apart from the arm portions 17b and 17c when the lid 17 is closed, or being opened or closed. Consequently, as the lid main section 17a is elastically deformed, the arm portions 17b and 17c can be satisfactorily deformed to enable the lid 17 to be opened or closed positively.

As shown in Figure 3, the rear half portion of each of the arm portions 17b and 17c of the lid 17 is formed to have a substantially fan-like configuration which is spread in the forward direction from each of the peripheries of the shaft apertures 22a and 22b. Meanwhile, stopper edge surfaces 23a and 23b, which are respectively engaged with the arm portions 17b and 17c when the arm portions 17b and 17c are in their opened positions, are respectively formed on the stepped surface portions 20a and 20b of the housing 11. The stopper edge surfaces 23a and 23b are each so shaped that they are along the inclined sides of the rear half portions of the arm portions 17b and 17c, or inclined rearward from the centres symmetrical with respect to the up and down direction (see, for example, Figures 3 and 6). The upper and lower end portions of the edge surfaces 23a and 23b are formed as vertical surfaces 23a1 and 23b1, respectively, as illustrated in Figure 3. Accordingly, the central portions of these stopper edge surfaces 23a and 23b are formed as vertical surfaces 23a1 and 23b1, respectively, as illustrated in Figure 3. Accordingly, the central portions of these stopper edge surfaces 23a and 23b are located in the vicinity of the end edges of the supporting portions of the arm portions 17b and 17c as shown in Figure 3 or Figure 5 when the lid 17 is in its closed state.

As shown in Figure 5, the shafts 21a and 21b which respectively rotatably support the arm portions 17b and 17c of the lid 17 have different diameters and tapered surfaces 21a1 and 21b1 each being inclined forward at the end portions thereof. The apertures 22a and 22b formed through the arm portions 17b and 17c of the lid 17 to receive the shafts 21a and 21b respectively likewise have different inner diameters, so that the lid 17 cannot be mounted on the housing 11 the wrong way round.

As Figures 3 and 4 show, on the front surface of the lid main section 17a, there is formed a guide groove 24 in then longitudinal direction of the lid main section 17a and at a location asymmetrical with respect to the up and down direction. As Figure 10 shows, when a plurality of the magnetic tape cassettes are respectively accommodated into a plurality of compartments 37 partitioning a single cassette magazine 35, the guide grooves 24 are respectively engaged with engaging portions 36 provided in the compartments 37 of the cassette magazine 35, thus making it possible to insert and keep the respective magnetic tape cassettes in the cassette magazine 35 in such a manner that the tracks A and B of the respective magnetic tape cassettes are aligned in the same direction. Since the guide groove 24 is formed on the lid 17, the mechanical strength of the housing 11 is not weakened. Particularly in a very small magnetic tape cassette, various detecting portions such as a tape end sensor and a label area for indication provided on the surface of the housing 11 are also not restricted.

As shown in Figure 3, on the surface of the lid main section 17a at both sides, there are formed engaging groove portions 25 in the up and down direction of the lid main section 17a. When the cassette is inserted into the compartment 37 of the cassette magazine 35, one of the groove portions 25 is engaged with a projection 38a of a latch mechanism 38 provided within each compartment 37 of the cassette magazine 35 so as to retain the cassette within the compartment 37. Since the engaging groove portions 25 are each formed on the lid 17, the mechanical strength of the housing 11 is not weakened. Particularly in the case of a very small magnetic tape cassette, various detecting sections and the label area for indication provided on the surface of the housing 11 are also not restricted.

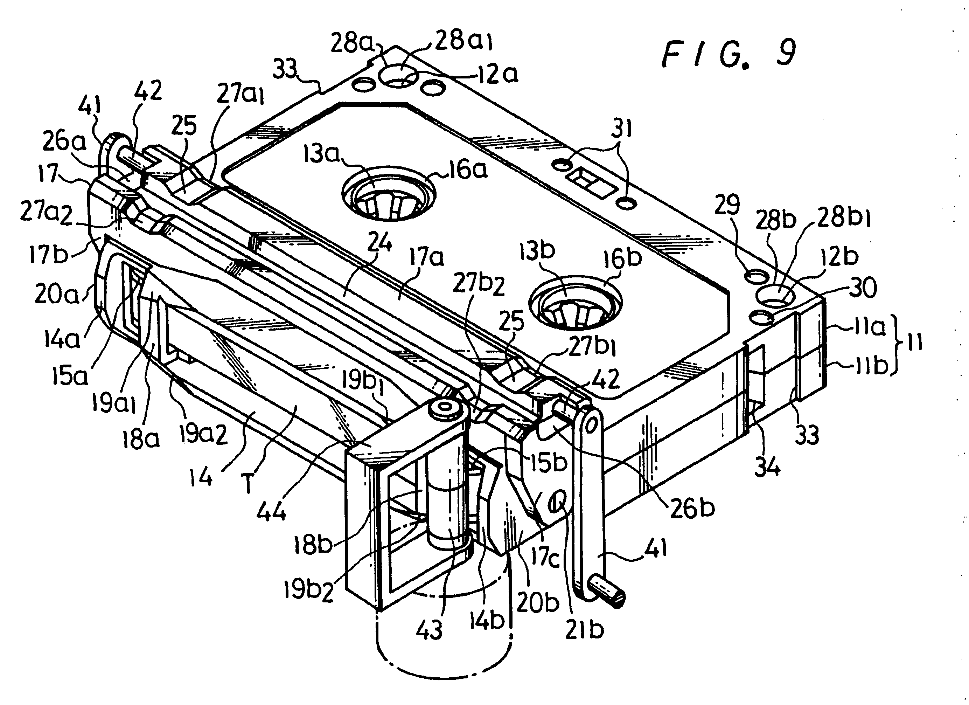

Figure 9 is a perspective view of the embodiment of magnetic tape cassette in use. As Figure 9 shows, on both side surfaces of the lid 17, that is, on both end surfaces of the lid main section 17a, there are respectively formed engaging concave portions 26a and 26b. The concave portions 26a and 26b are respectively engaged with engaging pins 42 of lid opening and/or closing mechanisms 41 provided at a tape cassette loading section of a reproducing apparatus (not shown). When the tape cassette with its lid 17 closed is loaded onto the tape cassette loading section, the engaging pins 42 are engaged with the concave portions 26a and 26b respectively. In this state, the lid opening and/or closing mechanisms 41 are rotated to allow the engaging pins 42 to rotate the lid 17 in the opening direction, thus opening the front opening portion 14 of the housing 11.

When the lid 17 is rotated and the front opening portion 14 of the housing 11 is opened, a capstan 43 is urged against the guide roller 15a or 15b through the upper or lower edge cut-away concave portions 14a1, 14a2 or 14b1, 14b2 of the front opening portion 14 (see Figure 4). To prevent the end of a capstan arm 44 from abutting against the lid 17, cut-away concave portions 27a1 and 27a2, and 27b1 and 27b2 are formed on the corner portions of the upper and lower end edge portions of the lid main section 17a in correspondence with the guide rollers 15a and 15b, respectively, whereby the lid 17 can be spaced apart from the end of the capstan arm 44. Thus, the capstan 43 can positively come into contact with the guide roller 15a and 15b, so that the tape T can be stably transported at a constant speed.

Apertures 28a and 28b for the rear screws 12a and 12b which couple the upper half 11a and the lower half 11b of the housing 11 together are formed so as to produce cavity portions 28a1 and 28b1 above the screw heads 12a1 and 12b1, or the upper half 11a side (Figure 8). These cavity portions 28a1 and 28b1 can be used for various kinds of detection, for example, for detecting the tracks A and B.

As shown in Figure 3, on the top surface portions adjacent to the apertures 28a and 28b and on substantially the central surface portion near the rear edge surface portion of the housing 11, there are respectively formed various detecting portions such as a tape thickness detecting hole 29, an auxiliary detecting hole 30 and a tape type select and/or cassette existence detecting hole 31, and an accidental erasure protection hole 32. Moreover, on each of the rear portions of both the side walls of the housing 11, an eject grip 33 and a changer grip 34 are formed across the upper half 11a and the lower half 11b, respectively.

As described, the guide groove 24 is formed on the front surface portion of the lid main section 17a at an asymmetrical position relative to the up and down direction of the lid 17 and so as to extend in its longitudinal direction. Thus, when the cassette is loaded into a compartment 37 of the cassette magazine 35, since the engaging portion 36 is formed on one side wall of each compartment 37 in association with the eccentric guide groove 24, a plurality of cassettes can readily be loaded into the compartments 37 of the cassette magazine 35 with the tracks A and B of all the cassettes aligned in the same direction.

Instead of the guide groove 24, a projecting guide rail may be formed on the lid main section 17a of the front lid 17. In this case, a guide groove corresponding to the guide rail is formed within each compartment 37 of the cassette magazine 35.

In both cases, therefore, when a plurality of tape cassettes are inserted into the cassette magazine, the guide member ensures that the tape cassettes are inserted in such a manner that the tracks A and B of the respective tape cassette are used again, and that each tape cassette is positively loaded from the desired side. In addition, since the guide member is formed on the lid, the mechanical strength of the cassette housing is not decreased, and the space for the various detecting sections and the indication labels is not restricted.

## Claims

1. A magnetic tape cassette comprising :
a cassette housing (1) having a front opening portion (14) ; and
a front lid (17) formed of a lid main section (17a) and supporting arm portions (17b, 17c) attached perpendicularly to said lid main section (17a) at respective end portions thereof, said front lid (17) being pivotably mounted on the front of said cassette (1) housing by said supporting arm portions (17b, 17c) so as selectively to open and close said front opening portion (14) of said cassette housing (1) ;
characterized by :
guide means (24) formed on the front surface portion of said lid main section (17a) at an asymmetrical position relative to the up and down direction of said front lid (17) and extending in a longitudinal direction.

2. A magnetic tape cassette comprising :
a cassette housing (1) having a front opening portion (14) ;
a front lid (17) formed of a lid main section (17a) and supporting arm portions (17b, 17c) attached perpendicularly to said lid main section (17a) at respective end portions thereof, said front lid (17) being pivotably mounted on the front of said cassette housing (1) by said supporting arm portions (17b, 17c) so as selectively to open and close said front opening portion (14) of said cassette housing (1) ;
tape guide rollers (15a, 15b) provided in said cassette housing (1) at respective side end portions of the front opening portion (14) of said cassette housing (1) ;
characterized by :
grooves (25) respectively formed on both side end portions of said lid main section (17a) at posi-

9  EP 0 295 921 B1  10

tions opposite to said guide rollers (15a, 15b) in a direction perpendicular to the longitudinal direction.

3. A cassette according to claim 1 wherein said guide means (24) is a groove (24).

4. A cassette according to claim 1 wherein said guide means (24) is a projecting guide rail.

5. A cassette according to claim 1 wherein said cassette housing (1) includes an upper half (1a) and a lower half (1b) fastened together by screws (12), one of said upper half (1a) and said lower half (1b) being provided with apertures in which the screws (12) are recessed so that cavity portions are visible above the recessed screws (12), said cavity portions identifying which track of the tape (T) in the cassette housing (1) is in use.

6. A cassette according to claim 1 further comprising detecting means (29, 30, 31, 32) for detecting various conditions of the tape (T) inside the cassette housing (1).

7. A cassette according to claim 6 wherein said detecting means (29, 30, 31, 32) includes at least one hole (29, 30, 31, 32) provided near a rear edge of the cassette housing (1).

8. A cassette housing to claim 7 wherein said at least one hole (29, 30, 31, 32) includes a hole (29) for detecting tape thickness.

9. A cassette according to claim 7 wherein said at least one hole (29, 30, 31, 32) includes a hole (32) for protecting against accidental erasure of the tape (T).

10. A cassette according to claim 1 further comprising tape guide rollers (15a, 15b) respectively provided in said cassette housing (1) at respective side end portions of the front opening portion (14) of said cassette housing (1), and grooves (25) respectively formed on both side end portions of said lid main section (17a) at positions opposite to said guide rollers (15a, 15b) in a direction perpendicular to the longitudinal direction.

**Patentansprüche**

1. Magnetbandkassette, mit einem Kassettengehäuse (1), das einen vorderen Öffnungsabschnitt (14) aufweist ; und einer vorderen Klappe (17), die aus einem Klappenhauptteil (17a) und Stützarmteilen (17b, 17c) gebildet ist, welche rechtwinklig zum Klappenhauptteil (17a) an dessen jeweiligen Endbereichen befestigt sind, wobei die vordere Klappe (17) mittels der Stützarmteile (17b, 17c) schwenkbar an der Vorderseite des Kassettengehäuses (1) befestigt ist, um den vorderen Öffnungsabschnitt (14) des Kassettengehäuses (1) wahlweise zu öffnen und zu schließen ; **gekennzeichnet durch :** eine Führungseinrichtung (24), die an dem vorderen Flächenabschnitt des Klappenhauptteils (17a) in einer asymmetrischen Position relativ zu der nach oben und nach unten weisenden Richtung der vorderen Klappe (17) ausgebildet ist und sich in einer Längsrichtung erstreckt.

2. Magnetbandkassette, mit einem Kassettengehäuse (1), das einen vorderen Öffnungsabschnitt (14) aufweist ; einer vorderen Klappe (17), die aus einem Klappenhauptteil (17a) und Stützarmteilen (17b, 17c) gebildet ist, welche rechtwinklig zum Klappenhauptteil (17a) an dessen jeweiligen Endbereichen befestigt sind, wobei die vordere Klappe (17) mittels der Stützarmteile (17b, 17c) schwenkbar an der Vorderseite des Kassettengehäuses (1) befestigt ist, um den vorderen Öffnungsabschnitt (14) des Kassettengehäuses (1) wahlweise zu öffnen und zu schließen ; Bandführungsrollen (15a, 15b), die im Kassettengehäuse (1) an jeweiligen seitlichen Endbereichen des vorderen Öffnungsabschnitts (14) des Kassettengehäuses (1) vorgesehen sind ; **gekennzeichnet durch :** Nuten (25), die jeweils in beiden seitlichen Endbereichen des Klappenhauptteils (17a) an Stellen ausgebildet sind, die den Führungsrollen (15a, 15b) in einer Richtung senkrecht zur Längsrichtung gegenüberliegen.

3. Kassette nach Anspruch 1, in welcher die Führungseinrichtung (24) eine Rinne (24) ist.

4. Kassette nach Anspruch 1, in welcher die Führungseinrichtung (24) eine vorspringende Führungsschiene ist.

5. Kassette nach Anspruch 1, in welcher das Kassettengehäuse (1) eine obere Hälfte (1a) und eine untere Hälfte (1b) umfaßt, die mittels Schrauben (12) miteinander verbunden sind, wobei eine der beiden Hälften (1a, 1b) mit Löchern versehen ist, in die die Schrauben (12) eingelassen sind, so daß Vertiefungsbereiche oberhalb der eingelassenen Schrauben (12) sichtbar sind, wobei die Vertiefungsbereiche kennzeichnen, welche Spur des Bandes (T) im Kassettengehäuse (1) in Benutzung ist.

6. Kassette nach Anspruch 1, ferner mit einer Erfassungseinrichtung (29, 30, 31, 32) zum Erfassen verschiedener Zustände des Bandes (T) innerhalb des Kassettengehäuses (1).

7. Kassette nach Anspruch 6, in welcher die Erfassungseinrichtung (29, 30, 31, 32) wenigstens eine Öffnung (29, 30, 31, 32) umfaßt, die nahe eines rückwärtigen Randes des Kassettengehäuses (1) vorgesehen ist.

8. Kassettengehäuse nach Anspruch 7, in welchem die wenigstens eine Öffnung (29, 30, 31, 32) eine Öffnung (29) zum Erfassen der Banddicke umfaßt.

9. Kassette nach Anspruch 7, in welcher die wenigstens eine Öffnung (29, 30, 31, 32) eine Öffnung (32) zum Schützen des Bandes (T) vor unabsichtlichem Löschen umfaßt.

10. Kassette nach Anspruch 1, ferner mit Bandführungsrollen (15a, 15b), die jeweils im Kassettengehäuse (1) an jeweiligen seitlichen Endbereichen

6

des vorderen Öffnungsabschnittes (14) des Kassettengehäuses (1) vorgesehen sind, und Nuten (25), die jeweils in beiden seitlichen Endbereichen des Klappenhauptteils (17a) an Stellen ausgebildet sind, die den Führungsrollen (15a, 15b) in einer Richtung senkrecht zur Längsrichtung gegenüberliegen.

## Revendications

1. Cassette à bande magnétique comportant :
un boîtier de cassette (1) ayant une partie d'ouverture avant (14) ; et
un volet avant (17) constitué d'une section principale de volet (17a) et de parties de bras de support (17b, 17c) fixés perpendiculairement à la dite section principale de volet (17a) aux parties d'extrémité respectives de celle-ci, le dit volet avant (17) étant monté de façon pivotante sur l'avant du dit boîtier (1) de cassette au moyen des dites parties de bras de support (17b, 17c) de façon à sélectivement ouvrir et fermer la dite partie d'ouverture avant (14) du dit boîtier de cassette (1) ;
caractérisée par :
des moyens de guidage (24) formés sur la partie de surface avant de la dite section principale de volet (17a) dans une position asymétrique par rapport à la direction vers le haut et vers le bas du dit volet (17) et s'étendant dans une direction longitudinale.

2. Cassette à bande magnétique comportant :
un boîtier de cassette (1) ayant une partie d'ouverture avant (14) ;
un volet avant (17) constitué d'une section principale de volet (17a) et de parties de bras de support (17b, 17c) fixés perpendiculairement à la dite section principale de volet (17a) aux parties d'extrémité respectives de celle-ci, le dit volet avant (17) étant monté de façon pivotante sur l'avant du dit boîtier de cassette (1) au moyen des dites parties de bras de support (17b, 17c) de façon à sélectivement ouvrir et fermer la dite partie d'ouverture avant (14) du dit boîtier de cassette (1) ;
des galets de guidage de bande (15a, 15b) prévus dans le dit boîtier de cassette (1) au niveau de parties d'extrémité latérales respectives de la partie d'ouverture avant (14) du dit boîtier de cassette (1) ;
caractérisée par :
des rainures (25) formées respectivement sur les deux parties d'extrémité latérales de la dite section principale de volet (17a) dans des positions opposées aux dits galets de guidage (15a, 15b) dans une direction perpendiculaire à la direction longitudinale.

3. Cassette selon la revendication 1, dans laquelle les dits moyens de guidage (24) sont constitués par une rainure (24).

4. Cassette selon la revendication 1, dans laquelle les dits moyens de guidage (24) sont constitués par un rail de guidage saillant.

5. Cassette selon la revendication 1, dans laquelle le dit boîtier de cassette (1) comporte une moitié supérieure (1a) et une moitié inférieure (1b) fixées ensemble par des vis (12), une des dites moitié supérieure (1a) et moitié inférieure (1b) étant pourvue d'ouvertures dans lesquelles les vis (12) sont enfoncées de telle sorte que des parties de cavité sont visibles au dessus des vis enfoncées (12), les dites parties de cavité identifiant quelle piste de la bande (T) dans le boîtier de cassette (1) est en utilisation.

6. Cassette selon la revendication 1, comportant en outre des moyens de détection (29, 30, 31, 32) destinés à détecter différentes conditions de la bande (T) à l'intérieur du boîtier de cassette (1).

7. Cassette selon la revendication 6, dans laquelle les dits moyens de détection (29, 30, 31, 32) comportent au moins un trou (29, 30, 31, 32) prévu à proximité d'un bord arrière du boîtier de cassette (1).

8. Cassette selon la revendication 7, dans laquelle le dit trou (29, 30, 31, 32) comporte un trou (29) destiné à détecter l'épaisseur de la bande.

9. Cassette selon la revendication 7, dans laquelle le dit trou (29, 30, 31, 32) comporte un trou (32) destiné à la protection contre l'effacement accidentel de la bande (T).

10. Cassette selon la revendication 1, comportant en outre des galets de guidage de bande (15a, 15b) prévus respectivement dans le dit boîtier de cassette (1) au niveau de parties d'extrémité latérales respectives de la partie d'ouverture avant (14) du dit boîtier de cassette (1), et des rainures (25) formées respectivement sur les deux parties d'extrémité latérales de la dite section principale de volet (17a) dans des positions opposées aux dits galets de guidage (15a, 15b) dans une direction perpendiculaire à la direction longitudinale.

# F I G. 1

# F I G. 2

F I G. 3

EP 0 295 921 B1

F I G. 4

EP 0 295 921 B1

## F I G. 5

## F I G. 6

FIG. 7

FIG. 8

FIG. 10

FIG. 9

EP 0 295 921 B1